# EUROPÄISCHE PATENTANMELDUNG

(11) **EP 3 072 575 A1**
(43) Veröffentlichungstag der Anmeldung: **28.09.2016**
(21) Anmeldenummer: 15160724.9
(22) Anmeldetag: 25.03.2015
(51) Int. Cl.: B01D 53/22, B01D 63/08

(54) **Membranmodul**

(71) Anmelder: Helmholtz-Zentrum Geesthacht Zentrum für Material- und Küstenforschung GmbH, 21502 Geesthacht (DE); Forschungszentrum Jülich GmbH, 52425 Jülich (DE)
(72) Erfinder: Notzke, Heiko, 21509 Glinde (DE); Brinkmann, Torsten, 21502 Geesthacht (DE); Wolff, Thorsten, 21502 Geesthacht (DE); Li, Zhao, 52428 Jülich (DE); Luhr, Sebastian, 41836 Hückelhoven (DE)
(74) Vertreter: Uexküll & Stolberg

(57) **Zusammenfassung**

Die vorliegende Erfindung betrifft ein neuartiges Membranmodul zur Trennung eines Fluid-Einsatzstroms in einen Permeat- und einen Retentatstrom. Das erfindungsgemäße Membranmodul zeichnet sich dadurch aus, dass alle Bauteile in einem 20', 40', 45' HC, 45' PW oder 53' HC Container untergebracht sind, wodurch das Membranmodul trotz seines vergleichsweise großen Volumens und seines hohen Gewichts sehr einfach und kostengünstig transportiert und gehandhabt werden kann. Das Membranmodul zeichnet sich im Vergleich zu üblicherweise verwendeten Membranmodulen ferner durch seine große Membranfläche aus, wodurch die in der praktischen Anwendung benötigte Anzahl einzelner Membranmodule um ein vielfaches reduziert werden kann. Ferner betrifft die vorliegende Erfindung ein Verfahren zur Trennung eines Fluid-Einsatzstroms in einen Permat- und einen Retentatstrom unter Verwendung des erfindungsgemäßen Membranmoduls.

## Beschreibung

Die vorliegende Erfindung betrifft ein Membranmodul zur Trennung eines Fluid-Einsatzstroms in einen Permeat- und einen Retentatstrom.

### HINTERGRUND DER ERFINDUNG

Die Verbrennung fossiler Energieträger zur Energiegewinnung ließ den Anteil von Kohlenstoffdioxid in der Erdatmosphäre in den letzten Jahrzehnten stark ansteigen, wobei die Konzentration von Kohlenstoffdioxid in der Erdatmosphäre seit Beginn der Industrialisierung um knapp 40% angestiegen ist. Ferner wird vermutet, dass die Emission von Kohlenstoffdioxid etwa 60% des vom Menschen verursachten Treibhauseffekts ausmachen. Um einer weiteren Erderwärmung entgegenzuwirken, ist es daher zwingend notwendig den Ausstoß von Kohlenstoffdioxid in die Erdatmosphäre so weit wie möglich zu verringern. Da ein großer Teil des globalen Kohlenstoffdioxidausstoßes durch die Verbrennung fossiler Energieträger in Kohlekraftwerken verursacht wird, verbirgt sich hier ein enormes Einsparpotential zur Verringerung der globalen Kohlenstoffdioxidemission.

In verfahrenstechnischen Großprozessen werden bereits verschiedene Verfahren zur Reduzierung des ausgestoßenen Kohlenstoffdioxids eingesetzt. Besonders vorteilhaft scheinen dabei sogenannte Membrantrennverfahren zu sein, bei denen das zu trennende Stoffgemisch, z.B. das Rauchgas eines Kraftwerks, mit Hilfe einer Membran in einen Retentat- und ein Permeatstrom getrennt wird. Als Permeatstrom wird der Strom bezeichnet, der die Membran durchdringt und somit vom Einsatzmaterial abgetrennt wird. Als Retentatstrom wird der um das Permeat abgereicherte Strom bezeichnet, der die Membran nicht durchdringt und die Trenneinheit verlässt. Das als Permeat abgetrennte Kohlenstoffdioxid kann dann anschließend mithilfe erneuerbarer Energien in verwertbare, kohlenstoffbasierte Produkte wie Kraftstoffe oder Polymere umgewandelt oder unterirdisch gespeichert oder als Nährstoff für Algen verwendet werden.

Um die zur Entfernung von Kohlenstoffdioxid aus dem Rauchgas eines Kraftwerks erforderliche Membranfläche zur Verfügung zu stellen, werden zur Zeit relativ kleine Membranmodule in großer Anzahl eingesetzt. Zum Entfernen des Kohlenstoffdioxids aus dem Rauchgas eines Steinkohlekraftwerks mit 1500 MW Leistung sind beispielsweise etwa 6,000 Standard-Membranmodule mit einer effektiven Membranfläche von jeweils 100 m² erforderlich. Die einzelnen Membranmodule müssen jedoch mit den entsprechenden Regelventilen und der Verrohrung ausgestattet werden, was den Prozess sehr fehleranfällig, wartungsintensiv und teuer macht. Es wäre daher wünschenswert, eine geringe Anzahl von vergleichsweise großen Membranmodulen einzusetzen. Die Handhabung und vor allem der Transport großer Membranmodule sind jedoch momentan aufgrund des vergleichsweise großen Volumens und des hohen Gewichts sehr aufwendig und teuer. Daher kommen vergleichsweise große Membranmodule bisher nicht zum Einsatz.

### BESCHREIBUNG DER ERFINDUNG

Der vorliegenden Erfindung liegt die Aufgabe zu Grunde, ein Membranmodul zur Verfügung zu stellen, mit dem die obigen Nachteile überwunden werden können. Insbesondere soll ein Membranmodul zur Verfügung gestellt werden, das eine vergleichsweise große Membranfläche aufweist und gleichzeitig einfach und kostengünstig transportiert und gehandhabt werden kann. Ferner soll ein Verfahren zur Trennung eines Fluid-Einsatzstroms in einen Permat- und einen Retentatstrom unter Verwendung des erfindungsgemäßen Membranmoduls zur Verfügung gestellt werden.

Die obigen Aufgaben werden durch ein Membranmodul gemäß Patentanspruch 1 und durch ein Verfahren gemäß Patentanspruch 8 gelöst.

Demgemäß wird ein Membranmodul zur Trennung eines Fluid-Einsatzstroms, der Permeatmaterial und Retentatmaterial umfasst, in einen Permeatstrom und Retentatstrom mit den Folgenden Merkmalen zur Verfügung gestellt. Das erfindungsgemäße Membranmodul umfasst einen 20', 40', 45' HC, 45' PW oder 53' HC Container im Wesentlichen von Quaderform mit einer Bodenwand, zwei bis vier Seitenwänden und einer Deckenwand, der in den Trennprozeß integriert ist.

Ferner umfasst das Membranmodul eine oder mehrere Fluideinlassöffnungen (Einsatzstromeinlassöffnungen) an mindestens einer Seitenwand des Containers sowie eine oder mehrere Retentataustrittsöffnungen zum Abführen des Retentatstroms an mindestens einer anderen Seitenwand des Containers. Die Fluideinlassöffnungen und Retentataustrittsöffnungen stehen in Strömungsverbindung miteinander.

Weiterhin umfasst das Membranmodul ein oder mehrere Permeataustrittsöffnungen an mindestens einer Boden-, Seiten- oder Deckenwand des Containers, die zum Abführen des Permeatstroms aus dem Container dienen. Ferner umfasst das Membranmodul ein oder mehrere innerhalb des Containers angeordnete Membrantaschenstapel. Die Membrantaschenstapel umfassen stapelförmig angeordnete Membrantaschen und benachbart zu der einen oder den mehreren Fluideinlassöffnungen und/oder der einen oder den mehreren Retentataustrittsöffnungen erste Abstandshalter zwischen den Membrantaschen. Die ersten Abstandshalter dienen dazu, die Membrantaschen auf Abstand zu halten, um einen freien Strömungsquerschnitt zum Durchfluss des Fluid-Einsatzstroms und/oder des Retentatstroms zu ermöglichen. Die Membrantaschen umfassen jeweils zwei Membrane, die auf jeweils einem Trägermaterial vorliegen sowie einen oder mehrere zwischen den Membranen vorliegende zweite Abstandshalter. Die zweiten Abstandshalter halten die Membrane auf Abstand und ermöglichen so einen freien Strömungsquerschnitt zum Durchfluss des Permeatstroms durch die Membrantaschen. Die Membranen einer Membrantasche sind ferner an den Rändern miteinander verbunden, um ein Eindringen des Fluid-Einsatzstroms und/oder des Retentatstroms in die Membrantaschen zu verhindern. Darüber hinaus umfasst das erfindungsgemäße Membranmodul ein oder mehrere Permeatrohre.

Das eine oder die mehreren Permeatrohre führen senkrecht zur Strömungsrichtung des Fluid-Einsatzstroms zu der einer oder den mehreren Permeataustrittsöffnungen. Die Permeatrohre umfassen ferner eine oder mehrere Radiale Öffnungen, durch die das Permeatmaterial aus den Membrantaschen in das eine oder die mehreren Permeatrohre gelangt. Weiterhin sind an dem einen oder den mehreren Permeatrohren zwischen den Membrantaschen erste Dichtungen angebracht, die einen Kontakt des Fluid-Einsatzstroms und/oder des Retentatstroms mit dem einen oder den mehreren Permeatrohren verhindern.

Im Folgenden wird die vorliegende Erfindung mit Bezug auf die Figuren im Detail beschrieben. Die Figuren zeigen dabei lediglich bevorzugte Ausführungsformen und beschränken die Erfindung in keiner Weise.
**Fig. 1** zeigt eine Draufsicht auf eine Ausführungsform des erfindungsgemäßen Membranmoduls.
**Fig. 2** zeigt eine Draufsicht auf eine weitere Ausführungsform des erfindungsgemäßen Membranmoduls.
**Fig. 3** zeigt eine Ausführungsform der an den Permeatrohren und zwischen den Membrantaschen angeordneten Dichtungen.
**Fig. 4** zeigt eine Ausführungsform der Öffnungen in einem Permeatrohr.
**Fig. 5** zeigt eine Ausführungsform der Membrantaschen.
**Fig. 6** zeigt die Strömungsrichtungen des Fluid-Einsatzstroms/Retentatstroms und des Permeatstroms gemäß einer Ausführungsform des erfindungsgemäßen Membranmoduls.
**Fig. 7** zeigt die Strömungsrichtungen des Fluid-Einsatzstroms/Retentatstroms und des Permeatstroms an einem Permeatrohr.

### Container

Das Membranmodul **10** umfasst einen 20', 40', 45' HC, 45' PW oder 53' HC Container **50**. Der Container **50** umfasst eine Bodenwand **60**, zwei bis vier Seitenwände **70** sowie eine Deckenwand **80** und weist im Wesentlichen Quaderform auf. Bevorzugt ist der Container **50** ein 20' oder 40' Container, besonders bevorzugt ein 20' Container.

Die Verwendung eines 20', 40', 45' HC, 45' PW oder 53' HC Containers **50** hat den Vorteil, dass dieser mit vielfach eingesetzten und weltweit standardisierten Vorrichtungen transportiert und gehandhabt werden kann. So müssen keine neuen Vorrichtungen zum Transport und zur Handhabung des Membranmoduls **10** konstruiert, gebaut und installiert werden, was zu einer erheblichen Kostenreduzierung führt.

### Fluideinlassöffnungen/Retentataustrittsöffnungen

Der Container **50** weist an einer Seitenwand **70** eine oder mehrere Fluideinlassöffnungen **90** zum Einbringen des Fluid-Einsatzstroms **20** in das Membranmodul **10** auf.

Wenn das Membranmodul **10** zum Entfernen von Kohlenstoffdioxid aus dem Rauchgas eines Kraftwerks verwendet wird, stellt das Rauchgas den Fluid-Einsatzstrom **20** dar. Das Rauchgas wird dann mit Hilfe von Verrohrungen durch die eine oder mehreren Fluideinlassöffnungen **90** in das Membranmodul **10** geleitet. Es sind jedoch auch andere Verwendungen des Membranmoduls **10** denkbar; die Verwendung des Membranmoduls **10** ist keineswegs auf das Entfernen von Kohlenstoffdioxid aus dem Rauchgas eines Kraftwerks beschränkt.

Ferner weist der Container **50** an einer anderen Seitenwand **70** eine oder mehrere Retentataustrittsöffnungen **100** zum Abführen des Retentatstroms **40** aus dem Membranmodul **10** auf.

Die Fluideinlassöffnungen **90** und Retentataustrittsöffnungen **100** stehen in Strömungsverbindung miteinander.

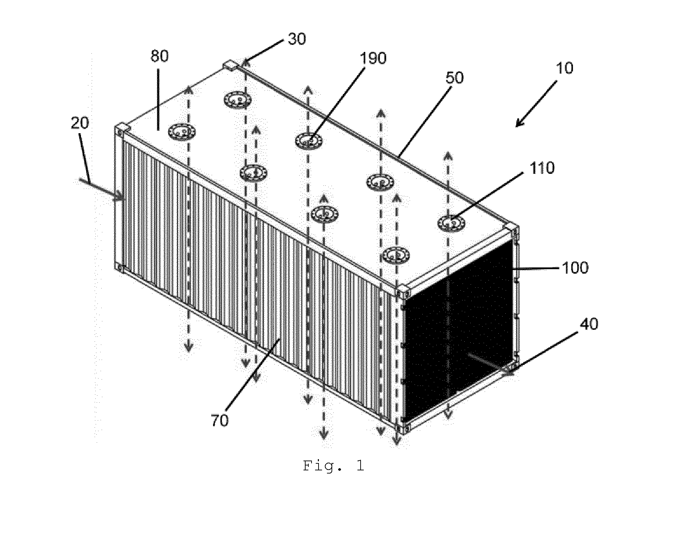

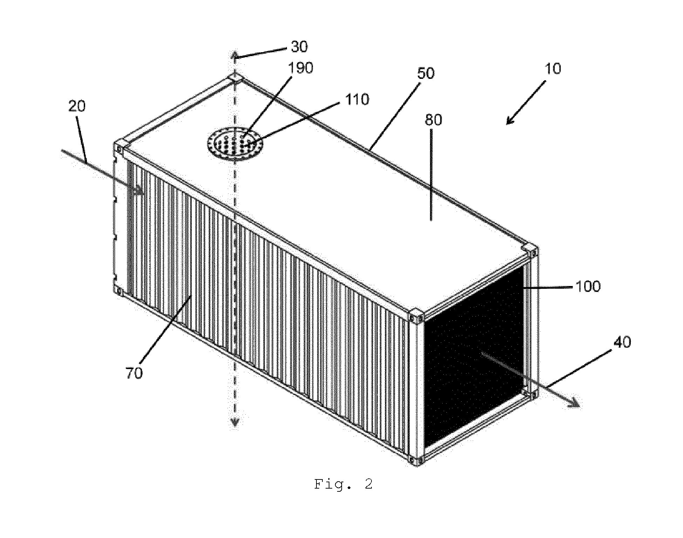

Gemäß einer in Fig. 1 und Fig. 2 gezeigten bevorzugten Ausführungsform ist eine Seitenwand **70** des Containers **50** vollständig als Retentataustrittsöffnung **100** ausgebildet. Bevorzugt ist eine andere Seitenwand **70** vollständig als Fluideinsatzöffnung **90** ausgebildet. Gemäß einer anderen Ausführungsform ist eine Seitenwand **70** vollständig als Fluideinlassöffnung **90** ausgebildet und eine andere Seitenwand **70** umfasst eine oder mehrere Retentataustrittsöffnungen **100**. Gemäß einer weiteren Ausführungsform ist eine Seitenwand **70** vollständig als Retentataustrittsöffnung **100** ausgebildet und eine andere Seitenwand **70** umfasst eine oder mehrere Fluideinlassöffnungen **90**. Wenn eine Seitenwand **70** vollständig als Fluideinlassöffnung **90** bzw. Retentataustrittsöffnung **100** ausgebildet ist, ist die Seitenwand **70** also vollständig durch die Fluideinlassöffnung **90** bzw. Retentataustrittsöffnung **100** ersetzt. Ein Container **50**, der eine vollständig als Fluideinlassöffnung **90** ausgebildete Seitenwand **70** sowie eine vollständig als Retentataustrittsöffnung **100** ausgebildete Seitenwand **70** aufweist, umfasst demnach eine Bodenwand **60**, zwei Seitenwände **70** sowie eine Deckenwand **80**.

Gemäß einer bevorzugten Ausführungsform ist die eine oder sind die mehreren Fluideinlassöffnungen **90** und die eine oder mehreren Retentataustrittsöffnungen **100** an gegenüberliegenden Seitenwänden **70** des Containers angebracht. Gemäß einer besonders bevorzugten Ausführungsform ist eine Seitenwand **70** vollständig als Fluideinlassöffnung **90** und die gegenüberliegende Seitenwand **70** vollständig als Retentataustrittsöffnung **100** ausgebildet. Gemäß einer anderen Ausführungsform umfasst eine Seitenwand **70** 1 bis **100**, bevorzugter 1 bis 10 Fluideinlassöffnungen **90** und eine andere Seitenwand **70**, bevorzugt gegenüberliegend zur ersten Seitenwand, ebenfalls 1 bis 100, bevorzugter 1 bis 10 Retentataustrittsöffnungen **100**.

### Permeataustrittsöffnungen

Ferner weist das Membranmodul **10** an mindestens einer Bodenwand **60**, Seitenwand **70** oder Deckenwand **80** des Containers **50** eine oder mehrere Permeataustrittsöffnungen **110** zum Abführen des Permeatstroms **30** auf.

Wenn das Membranmodul **10** zum Entfernen von Kohlenstoffdioxid aus dem Rauchgas eines Kraftwerks verwendet wird, stellt das aus dem Rauchgas entfernte Kohlenstoffdioxid den Permeatstrom **30** dar. Zur weiteren Aufreinigung kann der Permeatstrom des einen Membranmoduls **10** als Fluid-Einsatzstrom **20** in ein weiteres, in Reihe geschaltetes, Membranmodul **10** eingeführt werden.

Gemäß einer bevorzugten Ausführungsform umfasst sowohl die Bodenwand **60** als auch die Deckenwand **80** des Containers **50** die gleiche Anzahl einer oder mehrerer Permeataustrittsöffnungen **110**.

Bevorzugt sind die Permeataustrittsöffnungen **110** an der Bodenwand **60** und Deckenwand **80** gegenüberliegend angeordnet.

Gemäß einer in Fig. 1 gezeigten Ausführungsform umfasst das Membranmodul **10** jeweils acht Permeataustrittsöffnungen **110** in der Deckenwand **80** und Bodenwand **60** des Containers **50**. Gemäß der in Fig. 2 gezeigten Ausführungsform umfasst das Membranmodul **10** jeweils eine Permeataustrittsöffnung **110** in der Deckenwand **80** sowie der Bodenwand **60** des Containers **50**.

Gemäß einer bevorzugten Ausführungsform sind die Permeataustrittsöffnungen **110** als Flansch **210** ausgebildet.

Gemäß einer besonders bevorzugten Ausführungsform umfasst das Membranmodul **10** 1 bis 100, bevorzugter 1 bis 10, noch bevorzugter 1 bis 8 Permeataustrittsöffnungen **110**.

### Membrantaschenstapel

Darüber hinaus weist das Membranmodul **10** im Innern des Containers **50** eine oder mehrere Membrantaschenstapel **120** zur Trennung des Fluid-Einsatzstroms **20** in einen Permeatstrom **30** und einen Retentatstrom **40** auf.

Wenn das Membranmodul **10** zum Entfernen von Kohlenstoffdioxid aus dem Rauchgas eines Kraftwerks verwendet wird, stellt das vom Rauchgas abgetrennte Kohlenstoffdioxid den Permeatstrom **30** dar. Es ist jedoch auch denkbar, dass andere Verbindungen oder Substanzen von einem Fluid-Einsatzstrom **20** abgetrennt werden, wobei dann diese abgetrennten Verbindungen oder Substanzen den Permeatstrom **30** darstellen.

Die Membrantaschenstapel **120** umfassen stapelförmig angeordnete Membrantaschen **130**, die jeweils zwei Membranen **150** umfassen. Die Membranen **150** sind bevorzugt an jeweils ein Trägermaterial **160** befestigt.

Zwischen den Membrantaschen **130** sind bevorzugt erste Abstandshalter **140** angebracht, die die Membrantaschen **130** voneinander auf Abstand halten, um einen freien Strömungsquerschnitt zum Durchfluss des Fluid-Einsatzstroms **20** und/oder des Retentatstroms **40** zwischen den Membrantaschen **130** zu ermöglichen. Besonders bevorzugt sind die ersten Abstandshalter **140** benachbart zu der einen oder den mehreren Fluideinlassöffnungen **90** und/oder der einen oder den mehreren Retentataustrittsöffnungen **100** angebracht.

Die Membrantaschen **130** umfassen in ihrem Innern einen oder mehrere zweite Abstandshalter **170** zwischen den Membranen **150**, um die Membranen **150** voneinander auf Abstand zu halten, um einen freien Strömungsquerschnitt zum Durchfluss des Permeatstroms **30** durch die Membrantaschen **130** zu ermöglichen.

Die ersten und/oder zweiten Abstandshalter **140, 170** können unabhängig voneinander ein Kunststoffgewebe umfassen oder komplett daraus bestehen. Es sind jedoch auch andere Materialien denkbar, die der Fachmann anhand seines allgemeinen Fachwissens auswählen kann.

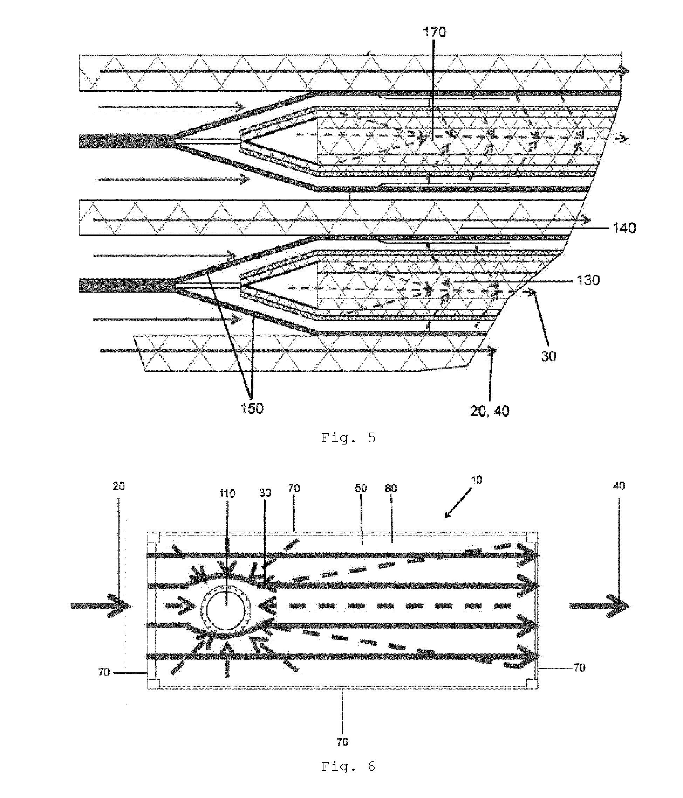

Wie in Fig. 5 gezeigt ist, sind die Membranen **150** einer Membrantasche **130** an den Rändern miteinander verbunden, um ein Eindringen des Fluid-Einsatzstroms **20** und/oder des Retentatstroms **40** in die Membrantaschen **130** zu verhindern. Gemäß einer bevorzugten Ausführungsform werden die Membranen **150** dadurch miteinander verbunden, dass sie thermisch miteinander verschweißt werden. Es sind jedoch auch andere Methoden zum Verbinden der Membranen 150, wie zum Beispiel Verkleben, denkbar.

### Permeatrohre

Weiterhin umfasst das Membranmodul **10** ein oder mehrere Permeatrohre **180**, die zu der einen oder den mehreren Permeataustrittsöffnungen **110** in der Bodenwand **60** und/oder Deckenwand **80** des Containers **50** führen, um den Permeatstrom **30** aus den Membrantaschen **130** zu der einen oder den mehreren Permeataustrittsöffnungen **110** zu leiten, wo der Permeatstrom **30** dann abgeführt werden kann.

Gemäß einer bevorzugten Ausführungsform ist das eine oder sind die mehreren Permeatrohre **180** senkrecht zu der Strömungsrichtung des Fluid-Einsatzstroms **20** in dem Container **50** in dem einen oder den mehreren Membrantaschenstapeln **120** angeordnet.

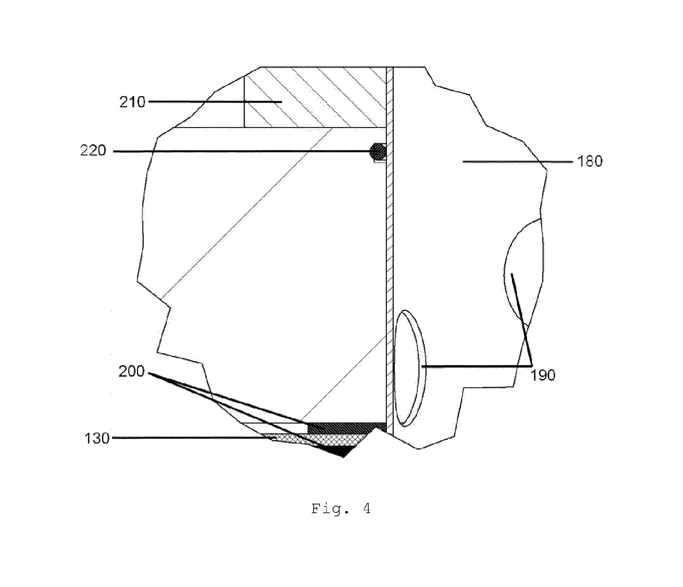

Wie in Fig. 4 gezeigt ist, umfasst das eine oder die mehreren Permeatrohre **180** Öffnungen **190**, durch die der Permeatstrom **30** aus den Membrantaschen **130** in das eine oder die mehreren Permeatrohre **180** fließen kann. Gemäß einer bevorzugten Ausführungsform ist/sind die eine oder die mehreren Öffnungen **190** radial in dem einen oder den mehreren Permeatrohren **180** angeordnet.

Ferner sind an dem einen oder den mehreren Rohren **180** zwischen den Membrantaschen **130** erste Dichtungen **200** angebracht, sodass ein Kontakt zwischen dem Fluid-Einsatzstrom **20** und/oder dem Retentatstrom **40** und dem einen oder den mehreren Permeatrohren **180** verhindert wird. So wird verhindert, dass weder der Fluid-Einsatzstrom **20** noch der Retentatstrom **40**, welche beide zwischen den Membrantaschen **130** vorliegen, in das eine oder die mehreren Permeatrohre **180** eindringt.

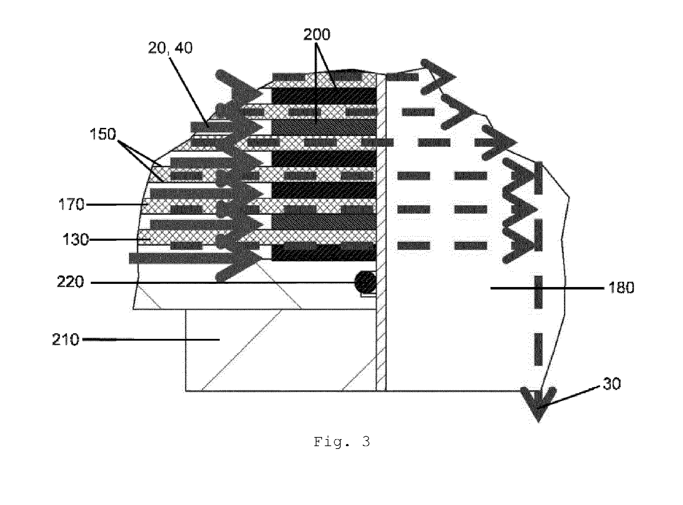

Bevorzugt ist das eine oder sind die mehreren Permeatrohre **180** mit zweiten Dichtungen **220** nach außen hin abgedichtet. Bevorzugt sind die zweiten Dichtungen **220** O-Ringe. Eine solche Ausführungsform ist beispielsweise in Fig. 3 und Fig. 4 gezeigt. Es sind jedoch auch weitere dem Fachmann bekannte Bauarten denkbar, um das eine oder die mehreren Permeatrohre **180** nach außen hin abzudichten.

### Verfahren zur Trennung eines Fluid-Einsatzstroms in einen Permeat- und einen Retentatstrom

Zur Trennung des Fluid-Einsatzstroms **20** in einen Permeatstrom **30** und einen Retentatstrom **40** wird der Fluid-Einsatzstrom **20** zunächst durch die eine oder die mehreren Fluideinlassöffnungen **90** in das Membranmodul **10** geleitet. Von dort fließt der Fluid-Einsatzstrom **20** in Richtung der einen oder den mehreren Retentataustrittsöffnungen **100** durch das Membranmodul **10**.

Beim Durchfluss durch das Membranmodul **10** fließt das in dem Fluid-Einsatzstrom **20** enthaltene Permeatmaterial (z.B. Kohlenstoffdioxid) durch die Membranen **150** hindurch in das Innere der Membrantaschen **130**. Für andere Bestandteile des Fluid-Einsatzstroms **20** sind die Membranen **150** hingegen weniger durchlässig. Auf diese Weise wird der Fluid-Einsatzstrom **20** in einen Permeatstrom **30** und einen Retentatstrom **40** im Wesentlichen getrennt. Der Permeatstrom **30** liegt dabei in den Membrantaschen **130** vor, der Retentatstrom **40** zwischen den Membrantaschen **130**.

Der Permeatstrom **30** fließt ferner aus den Membrantaschen **130** durch die Öffnungen **190** in das eine oder die mehreren Permeatrohre **180**.

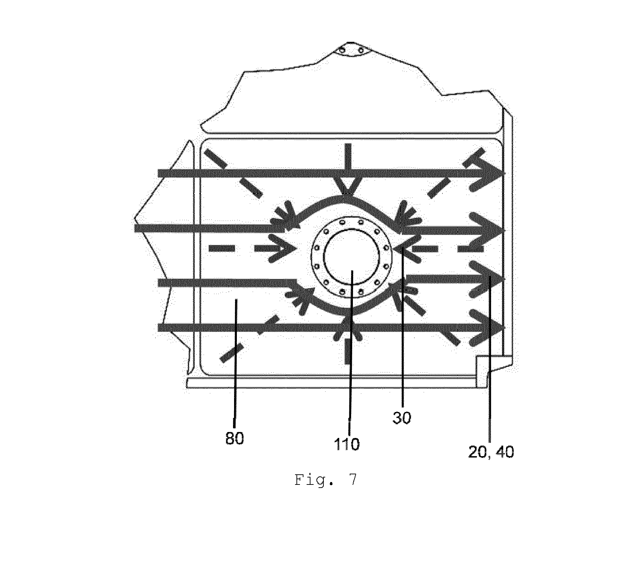

Die an dem einem oder den mehreren Permeatrohren **180** zwischen den Membrantaschen **130** angebrachten ersten Dichtungen **200** verhindern, dass der Fluid-Einsatzstrom **20** und/oder der Retentatstrom **40** in das eine oder die mehreren Permeatrohre **180** fließt. Dies ist beispielsweise in Fig. 3 veranschaulicht. Der zwischen den Membrantaschen fließende Retentatstrom **40** fließt daher **130** um das eine oder die mehreren Permeatrohre **180** herum in Richtung der Retentataustrittsöffnungen **100**. Dies ist beispielsweise in Fig. 6 und Fig. 7 veranschaulicht.

Gemäß einer bevorzugten Ausführungsform wird an der einen oder den mehreren Permeataustrittsöffnungen **110** ein geringerer Druck als an der einen oder den mehreren Fluideinlassöffnungen **90** und der einen oder den mehreren Retentataustrittsöffnungen **100** angelegt. Dies kann beispielsweise mit Hilfe von Vakuumpumpen erreicht werden.

Da die Membrantaschen **130** über das eine oder die mehreren Permeatrohre **180** und die eine oder die mehreren Öffnungen **190** mit der einen oder den mehreren Retentataustrittsöffnungen **100** in Strömungsverbindung stehen, liegt in den Membrantaschen **130** ein geringerer Druck als zwischen den Membrantaschen **120**, wo der Fluid-Einsatzstrom **20** und der Retentatstrom **40** fließt, vor. Dies führt dazu, dass das Permeatmaterial aus dem Fluid-Einsatzstrom **20** durch die Membranen **150** hindurch in das Innere der Membrantaschen **130** gesogen wird. Von dort wird der Permeatstrom **30** über die eine oder die mehreren Öffnungen **190** in das eine oder die mehreren Permeatrohre **180** und schließlich zu den Permeataustrittsöffnungen **110** gesogen, wo der Permeatstrom **30** aus dem Membranmodul **10** abgeführt wird.

Auf diese Weise kann die Trennleistung des Membranmoduls **10** erhöht werden. Die in den Membrantaschen **130** vorliegenden zweiten Abstandshalter **170** gewährleisten auch bei Anlegen eines Unterdrucks einen freien Strömungsquerschnitt in den Membrantaschen **130** zum Durchfluss des Permeatstroms **30**, indem sie verhindern, dass die Membranen **150** der Membrantaschen **130** aufgrund des Unterdrucks in den Membrantaschen **130** zusammengesogen werden.

Bei Verwendung eines in Fig. 2 und Fig. 6 gezeigten Membranmoduls **10**, das ein Permeatrohr **180** und jeweils eine Permeataustrittsöffnung **110** in der Deckenwand **80** und der Bodenwand **60** an der flussaufwärts gelegenen Seite des Membranmoduls **10** aufweist, werden der Fluid-Einsatzstrom **20** und der Permeatstrom **30** mindestens teilweise im Gegenstromprinzip aneinander vorbeigeführt. Dies ist in Fig. 6 veranschaulicht. Gemäß einer anderen Ausführungsform umfasst das Membranmodul **10** mehrere Permeatrohre **180** und Permeataustrittsöffnungen **110** an der flussaufwärts gelegenen Seite des Membranmoduls **10**. Auch gemäß einer solchen Ausführungsform werden der Fluid-Einsatzstrom **20** und der Permeatstrom **30** mindestens teilweise im Gegenstromprinzip aneinander vorbeigeführt. Auf diese Weise wird der Wirkungsgrad des Membranmoduls **10** im Vergleich zu Membranmodulen mit Gleich- und Kreuzstromprinzip verbessert.

### Verwendung des erfindungsgemäßen Membranmoduls

Das erfindungsgemäße Membranmodul wird bevorzugt zur Abtrennung von Gasen aus einem Fluid-Einsatzstrom **20** verwendet. Dabei ist weder das Gas noch der Fluid-Einsatzstrom **20** auf bestimmte Verbindungen oder Substanzen beschränkt.

Bevorzugt ist das aus dem Fluid-Einsatzstrom **20** entfernte Gas Kohlenstoffdioxid. Besonders bevorzugt wird das erfindungsgemäße Membranmodul zum Entfernen von Kohlenstoffdioxid aus dem Rauchgas eines Kraftwerks verwendet. Unter Verwendung eines 20' Containers wären zur Abtrennung von Kohlenstoffdioxid aus dem Rauchgas eines Steinkohlekraftwerks mit 1500 MW Leistung anstatt der derzeit benötigten 6,000 Membranmodule nur insgesamt 90 Membranmodule erforderlich. Bei Verwendung größerer Container wären dementsprechend weniger Membranmodule erforderlich.

## Patentansprüche

1. Membranmodul (10) zur Trennung eines Fluid-Einsatzstroms (20), der Permeatmaterial und Retentatmaterial umfasst, in einen Permeatstrom (30) und einen Retentatstrom (40), umfassend:
a. einen 20', 40', 45' HC, 45' PW oder 53' HC Container (50) im Wesentlichen von Quaderform mit einer Bodenwand (60), zwei bis vier Seitenwänden (70) und einer Deckenwand (80);
b. eine oder mehrere Fluideinlassöffnungen (90) an mindestens einer Seitenwand (70);
c. eine oder mehrere Retentataustrittsöffnungen (100) zum Abführen des Retentatstroms an mindestens einer anderen Seitenwand (70), die in Strömungsverbindung mit den Fluideinlassöffnungen (90) stehen;
d. ein oder mehrere Permeataustrittsöffnungen (110) an mindestens einer Boden-, Seiten- oder Deckenwand (60, 70, 80) zum Abführen des Permeatstroms (30);
e. ein oder mehrere innerhalb des Containers (50) angeordnete Membrantaschenstapel (120), die stapelförmig angeordnete Membrantaschen (130) und benachbart zu der einen oder den mehreren Fluideinlassöffnungen (90) und/oder der einen oder den mehreren Retentataustrittsöffnungen (100) erste Abstandshalter (140) zwischen den Membrantaschen (130) umfassen, die die Membrantaschen (130) auf Abstand halten, um einen freien Strömungsquerschnitt zum Durchfluss des Fluid-Einsatzstroms (20) und/oder des Retentatstroms (40) zu ermöglichen,
wobei die Membrantaschen (130) jeweils zwei Membranen (150) auf jeweils einem Trägermaterial (160) und einen oder mehrere zweite Abstandshalter (170) zwischen den Membranen (150) umfassen, die die Membranen (150) auf Abstand halten, um einen freien Strömungsquerschnitt zum Durchfluss des Permeatstroms (30) durch die Membrantaschen (130) zu ermöglichen,
und wobei die Membranen (150) einer Membrantasche (130) an den Rändern miteinander verbunden sind, um ein Eindringen des Fluid-Einsatzstroms (20) und/oder des Retentatstroms (40) in die Membrantaschen (130) zu verhindern;
f. ein oder mehrere Permeatrohre (180), die senkrecht zur Strömungsrichtung des Fluid-Einsatzstroms (20) zu der einen oder den mehreren Permeataustrittsöffnungen (110) führen,
wobei das eine oder die mehreren Permeatrohre (180) eine oder mehrere radiale Öffnungen (190) umfasst/umfassen, durch die das Permeatmaterial aus den Memrantaschen (130) in das eine oder die mehreren Permeatrohre (180) gelangt,
und wobei an dem einen oder den mehreren Permeatrohren (180) zwischen den Membrantaschen (130) erste Dichtungen (200) angebracht sind, die einen Kontakt des Fluid-Einsatzstroms (20) und/oder Retentatstroms (40) mit dem einen oder den mehreren Permeatrohren (180) verhindern.

2. Membranmodul (10) nach Anspruch 1, wobei der Container (50) ein 20' oder 40' Container, bevorzugt ein 20' Container, der besonders bevorzugt in den Trennprozess integriert ist.

3. Membranmodul (10) nach einem der vorhergehenden Ansprüche, wobei eine Seitenwand (70) vollständig als Fluideinlassöffnung (90) ausgebildet ist und/oder eine andere Seitenwand (70) vollständig als Retentataustrittsöffnung (100) ausgebildet ist.

4. Membranmodul (10) nach einem der Ansprüche 1 oder 2, wobei eine Seitenwand (70) 1 bis 100, bevorzugt 1 bis 10, Fluideinlassöffnungen (90) umfasst und eine andere Seitenwand (70) 1 bis 100, bevorzugt 1 bis 10, Retentataustrittsöffnungen (100) umfasst.

5. Membranmodul (10) nach einem der vorhergehenden Ansprüche, wobei die eine oder mehreren Fluideinlassöffnungen (90) und die eine oder mehreren Retentataustrittsöffnungen (100) an gegenüberliegenden Seitenwänden (70) des Containers (50) angebracht sind.

6. Membranmodul (10) nach einem der vorhergehenden Ansprüche, das 1 bis 100, bevorzugt 1 bis 10, besonders bevorzugt 1 bis 8, Permeataustrittsöffnungen (110) umfasst.

7. Membranmodul (10) nach einem der vorhergehenden Ansprüche, wobei die eine oder mehreren Permeataustrittsöffnungen (110) als Flansch (210) ausgebildet ist/sind.

8. Verfahren zur Trennung eines Fluid-Einsatzstroms (20), der Permeatmaterial und Retentatmaterial umfasst, in einen Permeatstrom (30) und einen Retentatstrom (40), bei dem
a. ein Membranmodul (10) gemäß einem der Ansprüche 1 bis 7 zur Verfügung gestellt wird;
b. ein Fluid-Einsatzstrom (20) durch eine oder mehrere Fluideinlassöffnungen (90) in das Membranmodul (10) geleitet wird;
c. der Fluid-Einsatzstrom (20) in Richtung der einen oder den mehreren Retentataustrittsöffnungen (100) fließt, wobei das Permeatmaterial beim Durchfluss durch das Membranmodul (10) durch die Membranen (150) hindurch in die Membrantaschen (130) fließt, sodass das Fluid-Einsatzmaterial (20) in einen Permeatstrom (30) in den Membrantaschen (130) und einen Retentatstrom (40) zwischen den Membrantaschen (130) getrennt wird;
d. der Permeatstrom (30) aus den Membrantaschen (130) durch die eine oder mehreren radialen Öffnungen (190) in das eine oder die mehreren Permeatrohre (180) fließt, durch das eine oder die mehreren Permeatrohre (180) zu der einen oder den mehreren Permeataustrittsöffnungen (110) fließt und dort abgeführt wird;
e. der Retentatstrom (40) zwischen den Membrantaschen (130) zu der einen oder den mehreren Retentataustrittsöffnungen (100) fließt und dort abgeführt wird.

9. Verfahren nach Anspruch 8, **dadurch gekennzeichnet, dass** an der einen oder den mehreren Permeataustrittsöffnungen (110) ein Druck angelegt wird, der geringer ist als der Druck an der einen oder den mehreren Fluideinlassöffnungen (90) und der einen oder den mehreren Retentataustrittsöffnungen (100), sodass der Permeatstrom (30) durch die Membrantaschen (130) und die eine oder mehreren radialen Öffnungen (190) in das eine oder die mehreren Permeatrohre (180) geführt wird und an der einen oder den mehreren Permeataustrittsöffnungen (110) abgeführt wird.

10. Verfahren nach einem der Ansprüche 8 und 9, bei dem der Fluid-Einsatzstrom (20) und der Permeatstrom (30) mindestens teilweise im Gegenstromprinzip aneinander vorbeigeführt werden.

11. Verwendung des Membranmoduls (10) gemäß einem der Ansprüche 1 bis 7 zur Abtrennung von Gasen aus einem Fluid-Einsatzstrom (20).

12. Verwendung des Membranmoduls (10) gemäß einem der Ansprüche 1 bis 7 zum Entfernen von CO₂ aus einem Fluid-Einsatzstrom (20).

13. Verwendung des Membranmoduls (10) gemäß einem der Ansprüche 1 bis 7 zum Entfernen von CO₂ aus dem Rauchgas eines Kraftwerks.
